# EUROPEAN PATENT APPLICATION

(11) **EP 2 360 568 A2**
(43) Date of publication of application: **24.08.2011**
(21) Application number: 11154142.1
(22) Date of filing: 11.02.2011
(51) Int. Cl.: G06F 3/048

(54) **Instinctive operating method and electronic device using the same**

(30) Priority: 12.02.2010 TW 099104692; 12.11.2010 TW 099139076
(71) Applicant: UTW Technologies Corporation, Taipei (TW)
(72) Inventor: Li, Yu-Hsien, Taipei (TW)
(74) Representative: Liedtke, Markus

(57) **Abstract**

An instinctive operating method and an electronic device using the same are provided. The operating method includes displaying a virtual environment view composed of a plurality of images, wherein the plurality of images includes at least an object image, the plurality of images are disposed in the virtual environment view in a customary manner, and the spatial arrangement of each image in the virtual environment view is associated with each other. The operating method further includes sensing an object-image selection signal to enable the electronic device to execute a function associated with the object image when the object image is selected. The electronic device includes a touch sensitive screen and a computing device. The touch sensitive screen is capable of displaying the virtual environment view and sensing a selection signal. The computing device is coupled to the touch sensitive screen and includes a function module.

## Description

### BACKGROUND OF THE INVENTION

### 1. Field of the Invention

The present invention generally relates to an instinctive operating method and an electronic device using the same. Particularly, the present invention relates to an electronic device having a touch sensitive screen and an instinctive operating method thereof.

### 2. Description of the Prior Art

Accompanying the rapid advancement in electronic technologies, various handheld electronic products have greatly enriched the consumer market, satisfying consumers' diverse appetite of handheld electronic products for work and entertainment. For instance, handheld electronic products such as Mobile Internet Devices (MID), Personal Digital Assistants (PDA), E-books, digital photo frames, digital music players, electronic dictionaries, and Global Positioning System Navigators (GPS Navigators) have all contributed to satisfying consumers' demands for various handheld electronic devices. Besides considering the shrinking size and increasing functions of handheld electronic products, consumers will also factor in the aesthetics as well as the convenience in usage of the handheld electronic products. In light of these consideration factors by the consumers, touch sensitive screens are seen as satisfying the consumers' desires for small sizes, increased functions, convenience in usage, and pleasing aesthetics. Therefore, there is an advantage in replacing traditional button-pushing based input interfaces with touch sensitive screens in handheld electronic products.

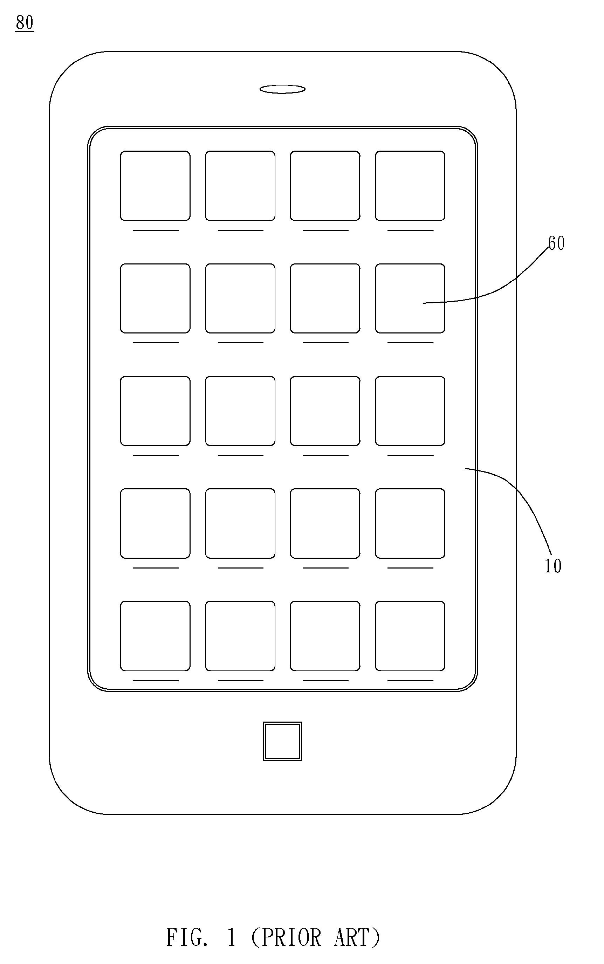

In regards to cellular phones, conventional mobile phones require the operator to simultaneously keep track of mobile phone display while pressing the buttons on the mobile phone to input words, numbers, or select instructions from the mobile phone's menu. In terms of mobile phones with touch screen, the operator may directly input words on the touch sensitive screen 10 as shown in FIG. 1. The operator may also select the function icon 60 on the touch sensitive screen 10 to invoke the electronic device 80 to execute applications. As can been seen through this example, touch screen in mobile phones can increase the convenience in inputting commands while also at the same time increase the operability of the mobile phones. However, as the processor speeds of the electronic device 80 exponentially increases and the quantity of applications increases, the amount of function icons 60 also exponentially increases. In addition, although the aesthetics of function icon 60 were designed during the conception to help operators differentiate between various different icons, the design of function icon 60 is still restricted and limited by the size and format of the icons. The limitations imposed on the icons by the size and format pose great challenges in trying to greatly improve differentiation between various function icons 60. As a result, operators are often unable to succinctly and conveniently locate the desired function icon 60 that corresponds to the function the operator would like the electronic device 80 to execute.

### SUMMARY OF THE INVENTION

It is an object of the present invention to provide an instinctive operating method for use in an electronic device that allows users to harness their experiences in real life to more comparatively instruct with ease the electronic device to execute desired functions.

It is another object of the present invention to provide an electronic device that allows users during operation of the device to use their life experiences to easily instruct the electronic device to execute desired functions.

The electronic device includes a screen. The instinctive operating method involves the following steps: displaying a virtual environment view composed of a plurality of images, the images including at least one object image and being disposed in a customary manner, wherein the spatial arrangement of each image in the virtual environment view is associated with each other; and sensing an object-image selection signal to enable the electronic device to execute a function associated with the object image.

In a preferred embodiment, the plurality of images further includes a background image. The object image is disposed in the customary manner within the background image and the spatial arrangement of the background image in the virtual environment view is associated with the object image. The electronic device has a screen. The step of displaying the virtual environment view includes displaying the virtual environment view on the screen. The step of sensing the object-image selection signal comprises sensing an action of selecting the object image performed on the screen. The screen comprises a touch sensitive screen.

The virtual environment view is a virtual display of reality. The virtual environment view includes a continuous three-dimensional view. Before the step of sensing the object-image selection signal, the instinctive operating method further includes displaying the virtual environment view from a different perspective. The images are disposed in the customary manner includes the images are disposed in a same manner as a real object corresponding to the object image being arranged and decorated in a real environment. The electronic device is capable of receiving an instruction signal. The instinctive operating method further includes changing the display of the object image in the virtual environment view in response to the instruction signal. The instruction signal includes a wireless telecommunication signal or a wireless network signal.

The electronic device includes a screen and a computing device. In standby mode, the screen is capable of displaying a virtual environment view and sensing a selection signal. The virtual environment view composed of a plurality of images includes at least one object image, wherein the images are disposed in a customary manner in the virtual environment view. The computing device, electrically connected to the screen, comprises a function module, wherein when the electronic device is in standby mode, the computing device enables the function module to execute a function associated with the object image when the screen senses the selection signal performed on a display region of the object image. The electronic device is capable of receiving an instruction signal, and the display of the object image in the virtual environment view displayed on the screen is changed in response to the instruction signal.

### BRIEF DESCRIPTION OF THE DRAWINGS

FIG. 1 is a schematic diagram of the prior art;

FIG. 2A is a block diagram of a preferred embodiment;

FIG. 2B is a block diagram of a different embodiment;

FIG. 3 is a schematic diagram of a preferred embodiment;

FIG. 4 is a schematic diagram of an embodiment;

FIG. 5 is a flow chart diagram of an embodiment of the method of the present invention;

FIG. 6 is a flow chart diagram of a preferred embodiment of the method of the present invention;

FIG. 7 is a schematic diagram of one embodiment of the virtual environment view from a different angle;

FIG. 8 is a schematic diagram of an embodiment with different virtual environment views;

FIG. 9 is a schematic diagram of an embodiment with a plurality of users utilizing the same virtual environment view.

### DETAILED DESCRIPTION OF THE PREFERRED EMBODIMENT

The present invention provides an electronic device and an instinctive operating method, wherein the electronic device is preferably portable, such as mobile phones, Mobile Internet Devices, Personal Digital Assistants, E-books, digital photo frames, digital music players, electronic dictionaries, Global Positioning System Navigators, laptop computers, and other related electronic devices. However, in other embodiments, the electronic device is not limited to the portable electronic device. The electronic device may be a desktop computer, a tablet computer, a multimedia television, or other related electronic products that are larger in size or heavier in weight.

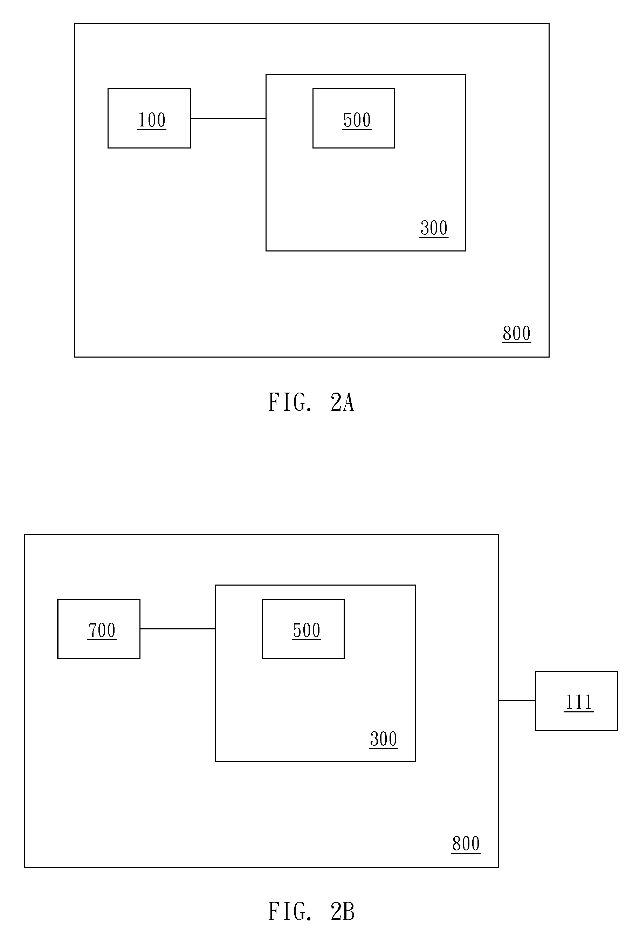

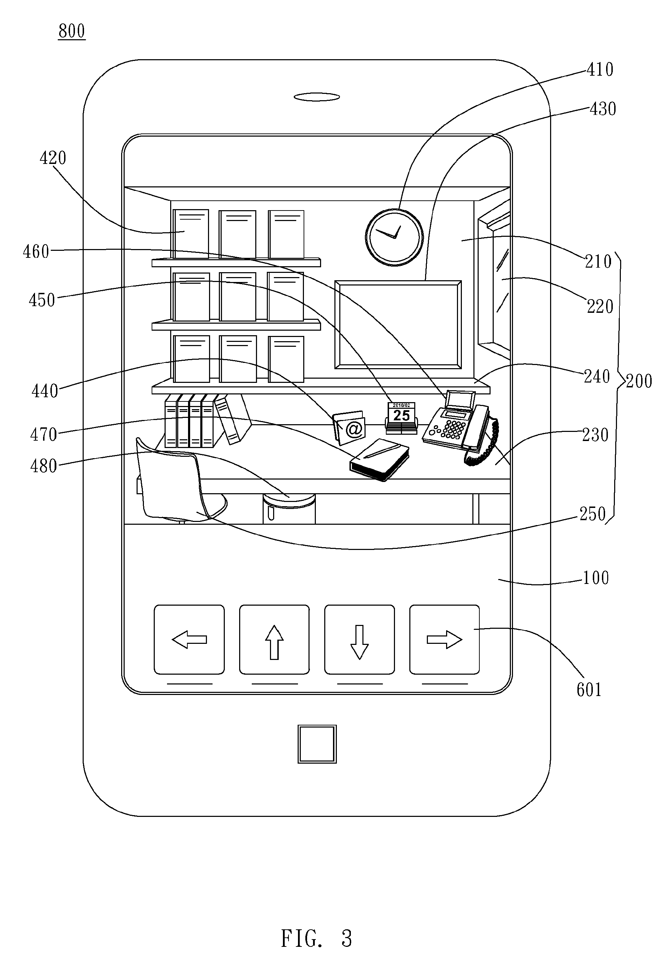

As shown in FIG. 2A, in a preferred embodiment, the electronic device 800 of the present invention includes a screen 100, a computing device 300, and a function module 500. In standby mode, the screen 100 may display a virtual environment view and sense a selection signal. The screen 100 is preferably a touch sensitive screen. The selection signal is preferably a touch signal of the touch sensitive screen. The virtual environment view is composed of a plurality of images including at least one object image, wherein the images are disposed in a customary manner in the virtual environment view. The spatial arrangement of each image in the virtual environment view is associated with each other. More specifically, the virtual environment view is a virtual display of reality. As shown in FIG. 3, in a preferred embodiment, the virtual environment view is a virtual display of a general office room environment in reality, wherein a wall 210, a window 220, a desk 230, a shelf 240, and a chair 250 together form a background image 200, while a clock 410, books 420, a bulletin board 430, a mail folder 440, a calendar 450, a telephone 460, a notebook 470, and a garbage bin 480 are object images. In other words, in the preferred embodiment, in addition to the at least one object image, the plurality of images of the virtual environment view further includes a background image, wherein object images are disposed in a customary manner in the background image. The spatial arrangement of the background image in the virtual environment view is associated with the object images. The background image may serve as the background of the entire virtual environment view.

The customary manner is the customary ways users of the electronic device 800 arrange and decorate real objects corresponding to the object images in a real environment. Particularly, disposing the images in the customary manner means the images are disposed in a same manner as a real object corresponding to the object image being arranged and decorated in a real environment. In other words, the spatial arrangement of the background image in the virtual environment view is associated with each object image. This association preferably coincides with intuitive knowledge gained from experiences in general life. For instance, in real life, clocks and bulletin boards are typically hung on walls; books are typically exhibited on top of shelves; mail folders, calendars, telephones, and notebooks are typically placed on desks; and garbage bins are typically placed under desks. Therefore, in the virtual environment view of FIG. 3, the images of the clock 410 and the bulletin board 430 are disposed on the wall 210 within the background image 200; the images of the books 420 are disposed on the shelves 240 within the background image 200; the images of the mail folder 440, the calendar 450, the telephone 460, and the notebook 470 are disposed on the desk 230 within the background image 200; and the image of the garbage bin 480 is disposed under the desk 230 within the background image 200. Since the object images are disposed within the background image using the customary manner, users can call upon their intuition learned from life experiences to more easily find object images within the virtual environment view.

As shown in FIG. 2A, the computing device 300, electrically connected to the screen 100, includes the function module 500. Specifically, in a preferred embodiment, the computing device 300 is the central processing unit of the electronic device 800. However, in other embodiments, the computing device 300 may also be a logical operation circuit of the electronic device 800. The function module 500 is preferably executed in an application of the computing device 300 of the electronic device 800. When the screen 100 senses the selection signal while under standby mode on a display region of the object image, the computing device 300 enables the function module 500 to execute a function associated with the object image.

For instance, as shown in FIG. 3, in a preferred embodiment, the associated function module to the telephone image is a telephone voice-communication module. When the screen 100 senses the selection signal performed on the display region of telephone 460 during standby mode, the computing device 300 enables the telephone voice-communication module to allow users to engage in telephone voice communication by means of the electronic device 800. The associated function module to the notebook 470 is a text editor module. When the screen 100 senses the selection signal performed on the display region of notebook 470 during standby mode, the computing device 300 enables the text editor module to allow users to engage in text editing by means of the electronic device 800. In other words, through the present invention, users may call upon their intuition learned from life experiences to more easily find and select object images within the virtual environment view to engage the electronic device to run functions desired by the users.

In other different embodiments, the electronic device may not include the screen. As shown in FIG. 2B, in a different embodiment, the electronic device 800 includes the computing device 300, the function module 500, and the sensing module 700. The virtual environment view is displayed through a display device 111. In other words, the electronic device 800 of FIG. 2B does not have a built-in screen, but rather utilizes the display device 111 to display the virtual environment view. The display device 111 includes a projector and the sensing module 700 includes a motion sensor. Specifically, the electronic device 800 may output the virtual environment view to the projector to display, and then utilize the motion sensor to sense the action of selecting the object image performed by the user in order to allow the electronic device to enable the function desired by the user.

As shown in FIG. 3, in a preferred embodiment, the virtual environment view is a virtual display of a general office room environment in real life. However, in other embodiments, the virtual environment view may include hospitals, conference rooms, factories, rooms or living rooms in homes, or other different locations. The background image and the object images may correspondingly change. For instance, if the virtual environment view is of a general hospital clinic, the background image may be a layout of a general hospital clinic while the object images, in addition to the clock, the bulletin board, the mail folder, the calendar, the telephone, the notebook, and the garbage bin as described above, may also include images of objects commonly seen in the hospital, such as X-ray box, medical dictionary. As such, users can easily and quickly locate the desired object image to execute associated function in different environment.

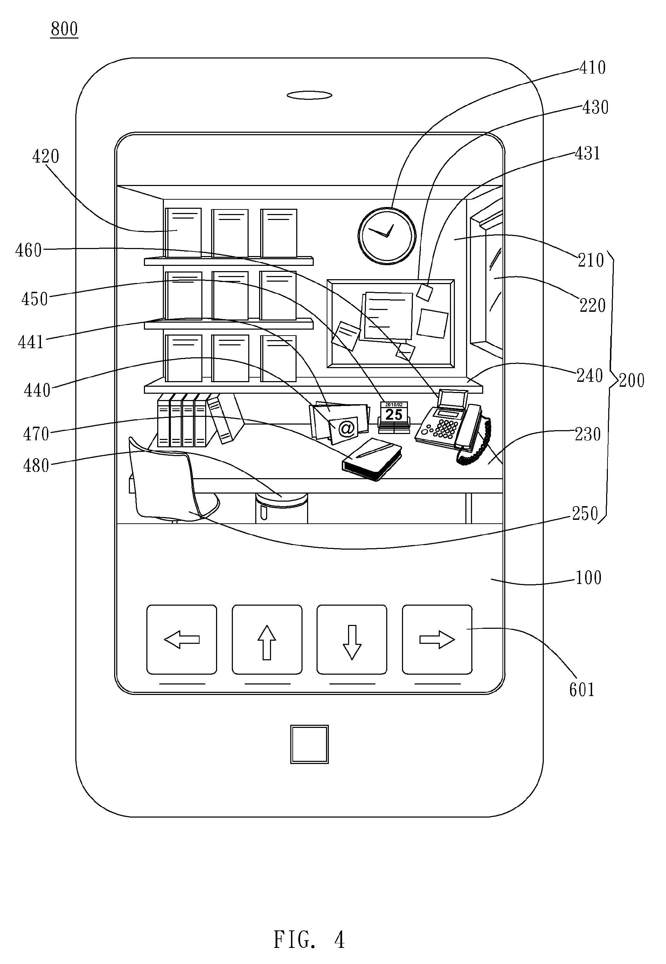

In a preferred embodiment, the electronic device 800 can receive an instruction signal. The electronic device 800 can further change the object image of the screen 100 according to the instruction signal. The instruction signal includes a wireless telecommunication signal or a wireless network signal. For instance, in FIG. 3, the mail folder 440 is empty. When the wireless network signal received by the electronic device 800 includes a "you've got email" notice (i.e. incoming mail notice), the electronic device 800 may correspondingly change the mail folder 440 image displayed on the screen 100 from having no mail displayed in the mail folder 440 to displaying having mail 441 in the mail folder 440 image, as shown in FIG. 4. Through this display change, the electronic device 800 can provide a convenience for users to confirm whether or not new mail has been received. On the other hand, the electronic device 800 may also change the object images displayed on the screen 100 according to results derived from the function module. For instance, in FIG. 3, the bulletin board 430 is empty. When the user touches the image of the bulletin board 430 and the screen 100 senses the selection signal performed on the display region of the bulletin board 430 while under standby mode, the computing device 300 enables the text editor module. When the text editor module completes execution thereof, the electronic device 800 can change the bulletin board 430 image displayed on the screen 100 to having a note 431, as shown in FIG. 4.

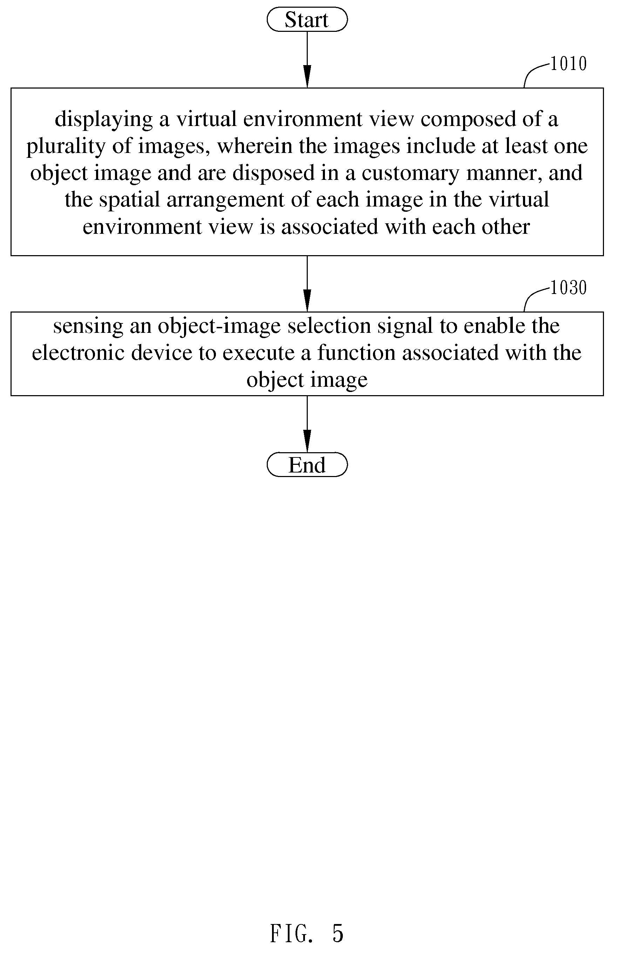

As shown in FIG. 5, the instinctive operating method of the present invention includes the following steps. Step 1010 involves displaying a virtual environment view composed of a plurality of images. The images include at least one object image and are disposed in a customary manner, wherein the spatial arrangement of each image in the virtual environment view is associated with each other. More specifically, as shown in FIG. 3, step 1010 involves enabling a screen 100 to display the virtual environment view. The virtual environment view includes a background image 200 composed of related structural elements such as a wall 210, a window 220, a desk 230, a shelf 240, and a chair 250. The virtual environment view further includes a plurality of object images composed of related elements such as a clock 410, books 420, a bulletin board 430, a mail folder 440, a calendar 450, a telephone 460, a notebook 470, and a garbage bin 480. In other words, in a preferred embodiment, in addition to the at least one object image, the plurality of images includes the background image. The object images are disposed in a customary manner within the background image, wherein the spatial arrangement of the background image in the virtual environment view is associated with the object images and the background image may serve as the background of the entire virtual environment view.

Step 1030 involves sensing an object-image selection signal to enable the electronic device to execute a function associated with the object image. In terms of the preferred embodiment, step 1030 involves sensing a touch on the screen 100 of the object image, such as the clock 410, book 420, bulletin board 430, mail folder 440, calendar 450, telephone 460, notebook 470, or garbage bin 480, as shown in FIG. 3. When the screen 100 senses the selection signal performed on the display region of the object image, a computing device 300 (as shown in FIG. 2A) enables a function module associated with the object image 500. However, in a different embodiment as shown in FIG. 2B, the electronic device may allow the electronic device to enable the function desired by the user by way of utilizing a motion sensor to sense the action of selecting the object image performed by the user in order to get the selection signal. When the screen 100 senses the selection signal performed on the display region of the object image, the computing device 300 (as shown in FIG. 2B) enables a function module associated with the object image 500.

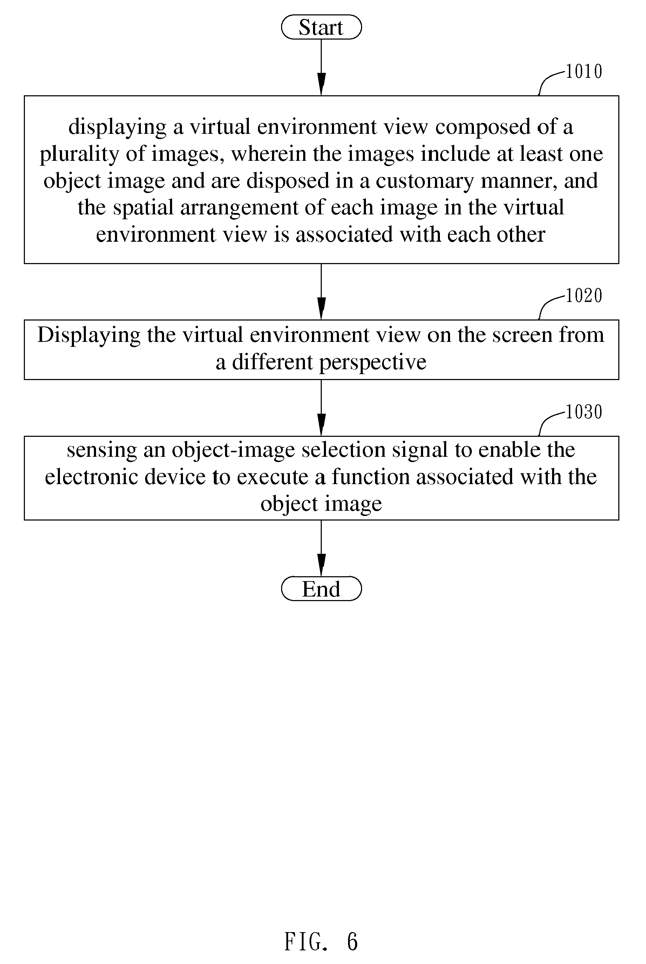

As shown in FIG.6, in a preferred embodiment, the instinctive operating method further includes a step 1020 before the step 1030. Step 1020 involves displaying the virtual environment view on the screen from a different perspective. More specifically, in the preferred embodiment, the virtual environment view includes a continuous three-dimensional view. As shown in FIG. 4, when the user selects a turn-right icon 601, the screen 100 will display a virtual environment view turned 90 degrees to the right. Through this display manner, the virtual environment view can greater simulate reality and allow the electronic device 800 to be more user friendly during usage. In addition, the adjustment of the display angle of the virtual environment view performed thereof is not only limited through selecting icons. The adjustment of the display angle may be accomplished through other actions such as directly sliding or dragging by touch on the screen 100 to a desired direction, which further improves user convenience and user friendliness.

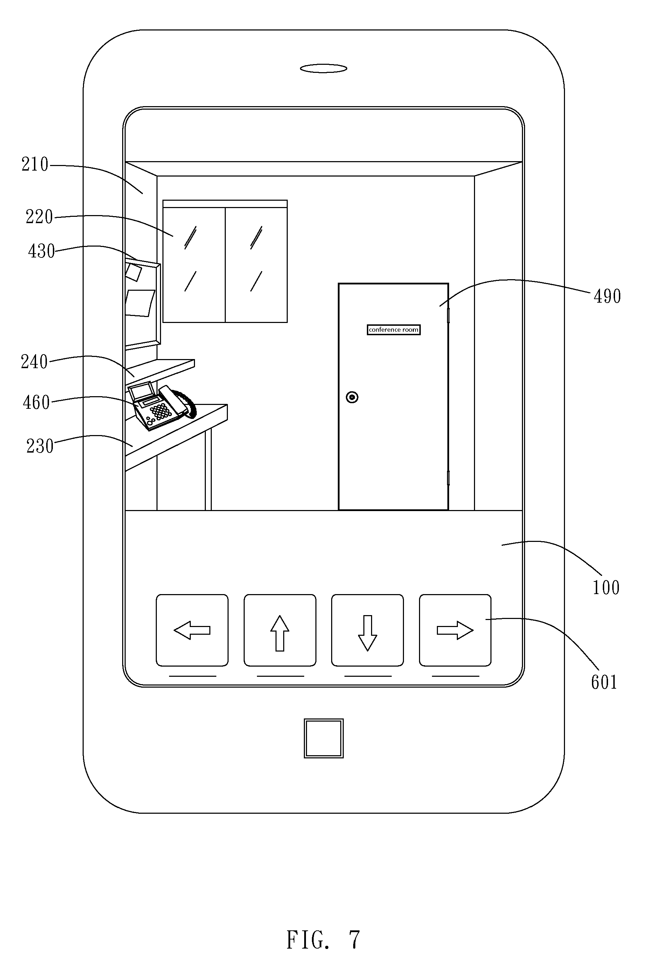

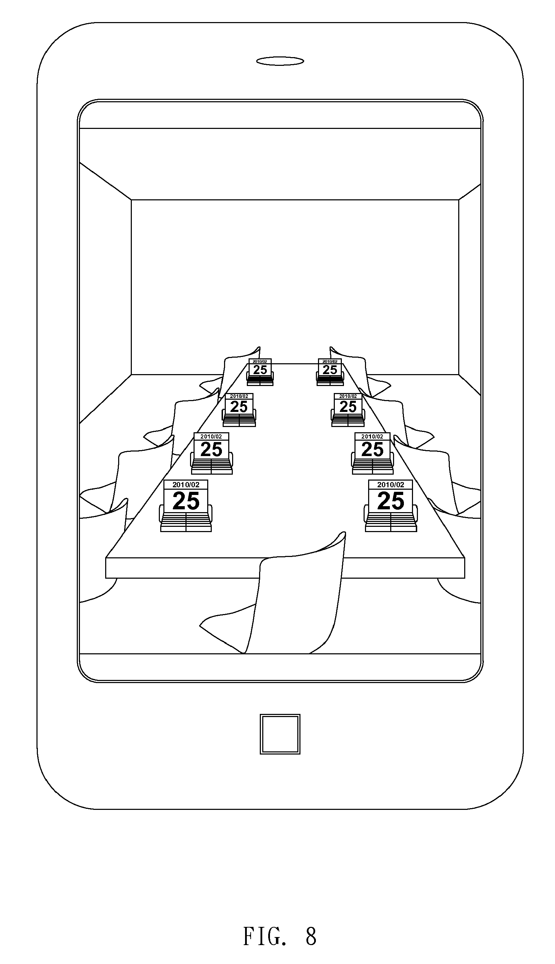

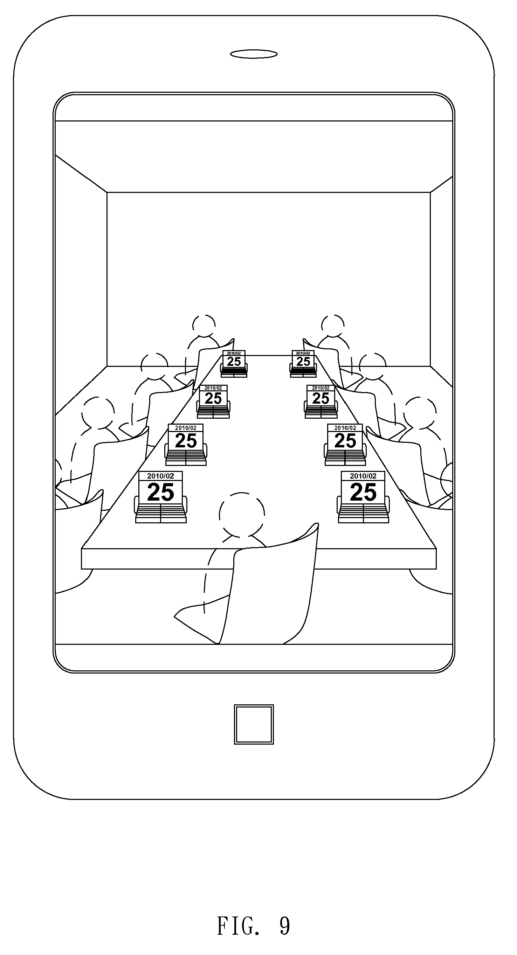

In a different embodiment, the user may select a specific object image to change the virtual environment view. As shown in FIG. 7, after the user selects the image of door 490, the screen 100 display of the virtual environment view will change to a conference room as shown in FIG. 8. In terms of the user, through utilizing the concept of opening a door in real life and entering another room, the present invention correspondingly utilizes by way of selecting the door 490 image to change the virtual environment view. In addition, a plurality of users may connect to other users through communication connections such as the internet. In terms of an example, these users may collectively attend a meeting in the conference room, as shown in FIG.9, by selecting the door 490 image on the screen 100 of their individual electronic devices 800.

Although the preferred embodiments of the present invention have been described herein, the above description is merely illustrative. Further modification of the invention herein disclosed will occur to those skilled in the respective arts and all such modifications are deemed to be within the scope of the invention as defined by the appended claims.

## Claims

1. An instinctive operating method for use in an electronic device, comprising:
displaying a virtual environment view composed of a plurality of images, the images comprising at least one object image and being disposed in a customary manner, wherein the spatial arrangement of each image in the virtual environment view is associated with each other; and
sensing an object-image selection signal to enable the electronic device to execute a function associated with the object image.

2. The instinctive operating method of Claim 1, wherein the images further comprise a background image, the object image is disposed in the customary manner within the background image, the spatial arrangement of the background image in the virtual environment view is associated with the object image.

3. The instinctive operating method of Claim 1, wherein the electronic device has a screen, the step of displaying the virtual environment view comprises displaying the virtual environment view on the screen, the step of sensing the object-image selection signal comprises sensing an action of selecting the object image performed on the screen.

4. The instinctive operating method of Claim 3, wherein the screen comprises a touch sensitive screen.

5. The instinctive operating method of Claim 1, wherein the electronic device is connected to a display device and has a sensor, the step of displaying the virtual environment view comprises displaying the virtual environment view through the display device, the step of sensing the object-image selection signal comprises the sensor sensing an action of selecting the object image performed by an user.

6. The instinctive operating method of Claim 5, wherein the display device comprises a projector.

7. The instinctive operating method of Claim 5, wherein the sensor comprises a motion sensor.

8. The instinctive operating method of Claim 1, wherein the virtual environment view is a virtual display of reality.

9. The instinctive operating method of Claim 1, wherein the virtual environment view comprises a continuous three-dimensional view.

10. The instinctive operating method of Claim 9, before the step of sensing the object-image selection signal, further comprising displaying the virtual environment view from a different perspective.

11. The instinctive operating method of Claim 1, wherein the images are disposed in the customary manner comprises the images are disposed in a same manner as a real object corresponding to the object image being arranged and decorated in a real environment.

12. The instinctive operating method of Claim 1, wherein the electronic device is capable of receiving an instruction signal, the instinctive operating method further comprises changing the display of the object image in the virtual environment view in response to the instruction signal.

13. The instinctive operating method of Claim 12, wherein the instruction signal comprises a wireless telecommunication signal or a wireless network signal.

14. An electronic device, comprising:
a screen capable of displaying a virtual environment view and
sensing a selection signal, the virtual environment view composed of a plurality of images including at least one object image, wherein the images are disposed in a customary manner in the virtual environment view, the spatial arrangement of each image in the virtual environment view is associated with each other; and
a computing device, electrically connected to the screen, comprising a function module, wherein the computing device enables the function module to execute a function associated with the object image when the screen senses the selection signal performed on a display region of the object image.

15. The electronic device of Claim 14, wherein the virtual environment view is a virtual display of reality, wherein the images are disposed in the customary manner comprises the images are disposed in a same manner as a real object corresponding to the object image being arranged and decorated in a real environment.
